(19) Europäisches Patentamt
European Patent Office
Office européen des brevets

(11) Numéro de publication : **0 353 129 B1**

# (12) FASCICULE DE BREVET EUROPEEN

(45) Date de publication du fascicule du brevet : **22.04.92 Bulletin 92/17**

(51) Int. Cl.[5] : **B01J 21/04,** B01J 37/06, C04B 38/02

(21) Numéro de dépôt : **89402073.4**

(22) Date de dépôt : **21.07.89**

(54) **Procédé de fabrication d'agglomérés d'alumine.**

(30) Priorité : **29.07.88 FR 8810248**

(43) Date de publication de la demande : **31.01.90 Bulletin 90/05**

(45) Mention de la délivrance du brevet : **22.04.92 Bulletin 92/17**

(84) Etats contractants désignés : **AT BE CH DE ES FR GB GR IT LI LU NL SE**

(56) Documents cités :
**EP-A- 0 121 735**
**FR-A- 2 347 100**
**FR-A- 2 496 631**

(73) Titulaire : **RHONE POULENC CHIMIE**
**25 Quai Paul Doumer**
**F-92408 Courbevoie Cédex (FR)**

(72) Inventeur : **Mercier, Marc**
**1010 Chemin/sous/Saint-Etienne**
**F-30100 - Ales (FR)**

(74) Mandataire : **Esson, Jean-Pierre et al**
**RHONE-POULENC CHIMIE Service Brevets**
**Chimie 25, quai Paul Doumer**
**F-92408 Courbevoie Cedex (FR)**

EP 0 353 129 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de fabrication d'agglomérés d'alumine active et les agglomérés obtenus selon ce procédé.

Elle concerne plus particulièrement un procédé de fabrication d'agglomérés d'alumine active poreuse et ayant une répartition de pores du type bimodale.

On connaît des agglomérés d'alumine poreuse présentant des propriétés mécaniques élevées. Ces agglomérés trouvent une application dans les procédés d'adsorption mais surtout dans le domaine de la catalyse. En effet, la catalyse hétérogène requiert parfois l'utilisation de supports de catalyseur ayant une surface active importante, de l'ordre de quelques mètres carrés à quelques centaines de mètres carrés par gramme et présentant une porosité importante constituée par des pores de quelques dizaines à quelques centaines d'Angstroëm.

En outre, pour faciliter les échanges entre les fluides et pour améliorer la diffusion des fluides dans le support de catalyseur, il a été proposé des procédés de fabrication d'agglomérés d'alumine présentant deux sortes de pores, d'une part des pores de dimension inférieure à 100 nm (1000 A) formant la microporosité, et d'autre part des pores de dimension supérieure à 100 nm (1000 Å) constituant la macroporosité.

Ainsi, la macroporosité permet un échange plus rapide et plus facile entre le milieu extérieur et les composés contenus dans le catalyseur, la microporosité assurant l'activité du catalyseur.

Il est connu d'après le brevet français 1386364 de préparer des agglomérés d'alumine possédant une grande solidité mécanique. Selon ce brevet, le procédé consiste à traiter des agglomérés d'alumine active à l'autoclave en présence d'eau, à sécher et calciner ces produits à une température déterminée pour obtenir la surface spécifique et la dimension de pores désirées.

Il a également été possible d'améliorer la solidité mécanique des agglomérés en traitant ceux-ci à l'autoclave en présence d'un acide, comme décrit dans les brevets US n°3628914 et 3480389.

Le brevet français n° 1383076 décrit un procédé qui permet d'obtenir des agglomérés d'alumine présentant une porosité contrôlée avec des résistances mécaniques à l'écrasement et à l'attrition élevées. Ce procédé consiste à imprégner de l'alumine active poreuse sous forme de grains, obtenue à partir d'hydrates d'alumine déshydratés dans un courant de gaz chaud, avec une quantité d'eau nécessaire pour remplir les pores de l'alumine, puis à procéder à la mise en forme, à la maturation et à la réactivation de ces agglomérés. Avant la mise en forme, il peut être ajouté un produit tel que la naphtaline, disparaissant totalement par chauffage notamment au cours du chauffage de réactivation, pour créer des pores de dimension élevée (macroporosité).

Pour renforcer la solidité de ces composés, il a été proposé, par le brevet français n° 2496631 de traiter ces agglomérés en les soumettant à un hydrotraitement en enceinte confinée, en présence d'acide.

Ainsi, les agglomérés obtenus sont imprégnés par une solution acide puis maintenus à une certaine température dans une enceinte confinée.

Ce traitement hydrothermal en présence d'acide permet de renforcer les propriétés mécaniques des agglomérés, mais présente comme inconvénient majeur de bouleverser la répartition poreuse des agglomérés traités, notamment en faisant disparaître au moins partiellement la macroporosité.

Un des buts de l'invention est de remédier à cet inconvénient en proposant un procédé qui permet de fabriquer des agglomérés d'alumine à porosité contrôlée et plus particulièrement présentant une microporosité et macroporosité, avec des propriétés mécaniques telles que, par exemple, résistance à l'écrasement et à l'attrition, remarquablement élevées.

A cet effet, l'invention propose un procédé de fabrication d'agglomérés d'alumine poreux consistant à former des corps d'alumine par agglomération d'une poudre d'alumine obtenue par déshydratation rapide d'un hydroxyde d'aluminium, à réaliser une maturation de ce corps d'alumine en atmosphère humide, à imprégner les corps mûris par une solution d'un ou plusieurs acides et à soumettre ces corps imprégnés à un traitement hydrothermal en autoclave. Les corps ainsi préparés sont séchés et calcinés pour réactivation.

Le procédé de l'invention qui consiste à imprégner par une solution d'acide, les corps mûris, sans réactivation au préalable, permet de conserver la texture poreuse du corps d'alumine obtenu par l'agglomération.

Ainsi, si les corps d'alumine agglomérés présentent une distribution bimodale des pores, distribution avantageuse pour une utilisation en catalyse, cette distribution bimodale est conservée pendant tout le traitement. Les agglomérés obtenus après séchage et calcination présentent donc la même répartition de pores et avantageusement des pores de dimensions inférieures à 100 nm (1000 Å) de diamètre compris entre 5,0 et 100 nm (50 - 1000 Å) appelés micropores et des pores de dimensions supérieures à 100 nm (1000 Å) appelés macropores.

L'invention permet donc d'obtenir des agglomérés de dimensions et répartition de pores contrôlées. Les dimensions et la répartition des pores sont choisies en fonction de l'utilisation souhaitée et créées pendant l'étape d'agglomération.

Ainsi, la microporosité qui correspond à la porosité de la poudre d'alumine utilisée sera déterminée par le choix de l'alumine mis en oeuvre et donc par les conditions de préparation de cette alumine.

Quant à la macroporosité, elle peut être créée par différentes méthodes comme le choix de la granulométrie de la poudre d'alumine, de l'agglomération de plusieurs poudres d'alumine de différentes granulométrie. Une autre méthode souvent employée consiste à mélanger à la poudre d'alumine un composé, appelé porogène, disparaissant totalement par chauffage et donc créant ainsi une macroporosité dans l'aggloméré.

Comme composés porogènes utilisés, on peut citer, à titre d'exemple, la farine de bois, le charbon de bois, le soufre, des goudrons, des matières plastiques ou émulsion de matières plastiques telles que le polychlorure de vinyle, des alcools polyvinyliques, la naphtaline ou analogues.

La quantité de composés porogènes ajoutés n'est pas critique et est déterminée par le volume macroporeux désiré.

Ainsi, pour obtenir des volumes macroporeux habituellement utilisés (pores supérieurs à 1000 Å), à savoir de l'ordre de 0,10 $cm^3/g$ à 0,80 $cm^3/g$, on ajoute entre 0 et 25 % en poids de porogène tel que la farine de bois, par exemple.

Selon une variante de procédé de l'invention, les corps d'alumine mûris sont séchés à température modérée pour éliminer l'eau présente dans les pores. Toutefois, ce séchage ne permet pas d'éliminer l'eau de constitution de l'alumine.

De préférence, la température de séchage de ces agglomérés mûris est inférieure à 200°C environ.

Au cours de cette étape de séchage, le composé porogène peut être décomposé.

Pendant la maturation des agglomérés en atmosphère à humidité contrôlée, la phase cristalline de l'alumine appelée boehmite se développe. Les conditions de cette maturation sont déterminées par le taux de boehmite que l'on souhaite obtenir.

A titre d'exemple, la maturation des agglomérés d'alumine est réalisée à une température comprise entre 30°C et 100°C sous atmosphère saturée en humidité. Le temps de maturation peut varier de quelques heures à quelques dizaines d'heures.

Les agglomérés mûris et éventuellement séchés sont ensuite imprégnés par une solution d'un acide ou de plusieurs acides, puis soumis à un traitement hydrothermal en enceinte confinée.

Ce traitement hydrothermal est généralement appelé "autoclavage en milieu acide", et a notamment été décrit dans les brevets français n° 1449904 et n° 2496631.

Il est conduit à une température supérieure à 80°C, de préférence comprise entre 150°C et 250°C pendant une durée de préférence comprise entre quelques minutes et 36 heures.

Selon un mode préféré du procédé de l'invention, la température du traitement hydrothermal est comprise entre 120 et 220°C pendant une période de temps comprise entre 15 minutes et 18 heures.

Ce traitement hydrothermal permet la transformation d'au moins une partie de l'alumine en boehmite. Il peut être réalisé soit sous pression de vapeur saturante, soit sous une pression partielle de vapeur d'eau au moins égale à 70 % de la pression de vapeur saturante correspondant à la température de traitement.

De préférence, les corps d'alumine sont calcinés à une température comprise entre 400°C et 1000°C.

L'imprégnation des agglomérés d'alumine par une solution acide peut être réalisée, soit préalablement à leur passage à l'autoclave par immersion dans la solution acide pendant une durée suffisante pour permettre à l'acide de diffuser dans les pores de l'alumine, soit sans imprégnation préalable, l'acidité étant dans ce cas apportée par le liquide de l'autoclave.

Les solutions d'acide convenables pour l'invention sont, par exemple, les solutions d'acide nitrique, chlorhydrique, perchlorique, sulfurique ou les acides plus faibles, tels que l'acide acétique, dont la solution a un pH inférieur à environ 4, ou un mélange d'acides. Selon un mode de réalisation préférée, l'acide nitrique et l'acide acétique seul ou en mélange, sont les plus employés.

Il est également possible d'imprégner les agglomérés d'alumine mûris par une solution d'acides et de composés apportant un anion capable de se combiner avec les ions aluminium en solution, comme décrit dans le brevet français n° 2496631.

Ainsi, à titre d'exemple on peut citer les composés comprenant un anion nitrate, chlorure, sulfate, perchlorate, chloroacétate, dichloroacétate, trichloroacétate, bromoacétate, dibromoacétate et les anions de formule générale :

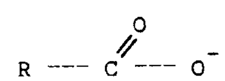

comme les formiates, acétates, citrates.

Les agglomérés ainsi traités sont ensuite éventuellement séchés à une température généralement comprise entre environ 100°C et 200°C pendant une période de temps suffisante pour enlever l'eau non liée chimiquement à l'alumine. Les agglomérés sont ensuite soumis à une activation thermique à une température comprise entre environ 400°C et 1100°C pendant une période de temps comprise entre environ 15 minutes et 2 heures.

La température d'activation est choisie en fonction de l'utilisation des agglomérés. Ainsi, pour une application dans le domaine de la catalyse pour le traitement des gaz d'échappement des moteurs à combustion interne, on préférera une activation à une température comprise entre environ 600 et 1000°C.

L'alumine active mise en oeuvre dans l'invention est généralement obtenue par déshydratation rapide des hydroxydes d'aluminium tels que la bayerite,

l'hydrargillite ou gibbsite, la nordstrandite ou des oxyhydroxydes d'aluminium tels que la boehmite ou le diaspore.

Cette déshydratation est obtenue à l'aide d'un courant de gaz chauds permettant d'éliminer et entraîner très rapidement l'eau évaporée. La température des gaz dans l'appareillage varie généralement de 400°C à 1200°C environ avec un temps de contact de l'hydroxyde avec les gaz chauds de l'ordre d'une fraction de seconde à 4 ou 5 secondes.

L'alumine ainsi obtenue peut être utilisée telle quelle ou peut subir un traitement pour éliminer notamment les alcalins présents.

La surface spécifique mesurée par la méthode BET de l'alumine active obtenue par déshydratation rapide d'hydroxydes ou d'oxyhydroxydes d'aluminium varie généralement entre environ 50 et 400 $m^2/g$, le diamètre des particules est généralement compris entre 0,1 et 300 microns, de préférence entre 1 et 120 microns.

Cette alumine présente un volume poreux de l'ordre de 0,10 à 0,50 $cm^3/g$, les pores ayant des dimensions inférieures à 500 Å.

Selon un mode de réalisation particulier de l'invention, l'alumine active provient de la déshydratation rapide de l'hydrate de Bayer (hydrargillite) qui est un hydroxyde d'aluminium industriel facilement accessible et très bon marché. Une telle alumine active est bien connue de l'homme du métier et a notamment été décrite dans le brevet français n° 1108011.

L'agglomération de l'alumine active est réalisée selon les méthodes connues de l'homme du métier telles que, par exemple, par pastillage, extrusion, mise en forme sous forme de billes au drageoir tournant, etc...

Cette agglomération peut être réalisée sur l'alumine active telle qu'elle est obtenue par déshydratation et éventuellement traitement subséquent, ou sur une alumine active broyée à une ou plusieurs granulométries déterminées.

Comme il a déjà été indiqué précédemment, des agents porogènes peuvent être ajoutés à l'alumine active avant ou pendant l'agglomération.

Les agglomérés obtenus ont par exemple un diamètre compris entre 2 mm environ et 5 mm environ et une perte au feu de l'ordre de 50 %.

Par perte au feu ou PAF, on entend le pourcentage de perte de poids après calcination pendant 2 heures à 1000°C.

Les agglomérés obtenus selon le procédé de l'invention après autoclavage et séchage sont constitués principalement par de l'alumine et de la boehmite. Le taux pondéral de boehmite est inférieur à 60 %. De plus, les cristallites de boehmite ont de petites dimensions de l'ordre de 100 Å de diamètre moyen, et inférieures à 12nm (120 Å).

La présence de petites cristallites de boehmite est un résultat remarquable. En effet, ce produit présente une meilleure stabilité thermique.

D'autres buts, caractéristiques et avantages de l'invention apparaîtront plus clairement au vu des exemples donnés ci-dessous uniquement à titre indicatif et des figures annexées dans lesquelles :

– la figure 1 représente un diagramme de répartition de pores de l'alumine de l'exemple 1, et

– la figure 2 représente un diagramme de répartition de pores de l'alumine de l'exemple 2.

EXEMPLE 1

De l'alumine active obtenue par déshydratation rapide d'hydrargillite a été broyée, par exemple, avec un broyeur à boulets, pour obtenir une poudre dont le diamètre moyen des particules est de 7 μm (100 % des particules ayant un diamètre inférieur à 96 μm).

Cette poudre présente une surface spécifique de 370 $m^2/g$ avec un volume poreux total de 30 $cm^3/100$ g et des pores de dimensions inférieures à 50 nm (500 Å). La teneur en sodium de l'alumine, exprimée en $Na_2O$, est de 800 ppm.

Cette alumine est mélangée avec de la farine de bois comme porogène (15 % en poids), puis mise en forme dans un granulateur ou drageoir. Pour permettre cette mise en forme, on ajoute de l'eau.

Les agglomérés ou billes d'alumines obtenues ont un diamètre compris entre 2 mm et 5 mm avec une perte au feu de 50 % environ.

Ces billes sont soumises à une étape de maturation par passage de vapeur d'eau à 100°C pendant 24 heures.

Les billes obtenues ont une perte au feu de 48 % environ, contiennent de l'ordre de 20 % de boehmite, et présentent la répartition de pores indiquée dans la figure 1 courbe A.

Ces billes sont immergées dans une solution d'acide acétique à 50 g/l pendant environ 5 heures. Ainsi les billes sont saturées en acide.

Les billes sont retirées de la solution et éventuellement égouttées.

Elles sont ensuite mises dans un autoclave pendant 2 heures environ, à une température de 210°C sous une pression de 20,5 bars.

En sortie d'autoclave, les billes sont séchées pendant 4 heures à 100°C.

Une analyse par spectrographie aux rayons X montre que ces billes contiennent 50 % de boehmite avec des cristallites de diamètre 9,5 nm (95 Å).

Après calcination pendant 2 heures à 900°C les billes présentent les caractéristiques suivantes :

– surface spécifique : 108 $m^2/g$

après vieillissement à 982°C pendant 24 heures : 32 $m^2/g$

– densité de grain : 0,86

– densité de remplissage total : 0,54 kg/l

– répartition de pores (mesurée par la méthode

au mercure) volume poreux pour pores de

∅ > 1000 nm (10000 Å) : 0,172 $cm^3/g$

∅ > 100 nm (1000 Å) : 9,319 $cm^3/g$

∅ > 10 nm (100 Å) : 0,826 $cm^3/g$

volume poreux total : 0,841 $cm^3/g$.

La répartition de pores est illustrée à la figure 1 courbe B.

EXEMPLE 2 COMPARATIF

On reproduit l'exemple 1 à la différence que les billes mûries sont activées et calcinées avant d'être soumises à maturation.

Les billes obtenues avant maturation ont les caractéristiques suivantes :

- surface spécifique : 233 $m^2/g$
- densité de grain : 0,80
- répartition de pores (mesurée par la méthode au mercure)

volume poreux pour pores de

∅ > 1000 nm (10000 Å) : 0,35 $cm^3/g$

∅ > 100 nm (1000 Å) : 0,415 $cm^3/g$

volume poreux total : 0,956 $cm^3/g$

La répartition de pores est illustrée à la figure 2 courbe A.

Ces billes de diamètre moyen égal à environ 3,15 mm, sont soumises à traitement hydrothermal identique à celui décrit dans l'exemple 1 puis séchées et calcinées.

Après autoclavage, le taux de boehmite observé est de 45 %, et le diamètre moyen des cristallites est de 15 nm (150 Å).

Après séchage et calcination à 900°C, les billes ont les caractéristiques suivantes :

- surface spécifique : 105 $m^2/g$

vieillissement 24 heures à 982°C : 46 $m^2/g$

- densité de grain : 0,78
- résistance à l'écrasement : 2,2 daN
- volume poreux total : 1 $cm^3/g$

volume poreux pour pores de

∅ > 1000 nm (10000 Å) : 0,004 $cm^3/g$

∅ > 100 nm (1000 Å) : 0,23 $cm^3/g$

La distribution du volume poreux en fonction du diamètre de pores est représentée sur la figure 2 courbe B.

Ces exemples montrent clairement que le procédé de l'art antérieur ne permet pas de conserver la répartition poreuse dans la bille d'alumine obtenue avant hydrotraitement.

EXEMPLE 3

De l'alumine active obtenue selon le procédé décrit dans l'exemple 1, à la différence qu'elle a une teneur en sodium élevée, est broyée pour obtenir une poudre dont le diamètre moyen des particules est de 12,9 µm.

Cette poudre présente une surface spécifique de 300 $m^2/g$ et un volume poreux total de 25 $cm^3/g$, les pores ayant un diamètre inférieur à 500 Å. Elle contient 2800 ppm d'oxyde de sodium (exprimé en $Na_2O$), et n'a pas subi un traitement pour diminuer sa teneur en sodium.

Comme dans l'exemple 1, l'alumine est mélangée avec de la farine de bois, comme porogène (15 % en poids), puis mise en forme dans un drageoir.

Les agglomérés d'alumine ont un diamètre compris entre 2 et 4 mm avec une perte au feu de 48,9 % et une répartition de pores :

Volume poreux

∅ > 1000 nm (10000 Å) 0,1 $cm^3/g$

∅ > 100 nm (1000 Å) 0,3 $cm^3/g$

Après maturation pendant 12 heures à 100°C, les billes ont une perte au feu de 46,4 % et un taux de boehmite voisin de 21 %.

Comme dans l'exemple 1, les billes sont immergées dans une solution d'acide acétique à 50 g/l pendant environ 5 heures.

Les billes sont ensuite soumises à un hydrotraitement ou autoclavage, éventuellement après un égouttage, pendant 2 heures environ, à 210°C sous 20,5 bars.

Les billes récupérées contiennent 40 % de boehmite et une teneur en $Na_2O$ voisine de 890 ppm, avec une perte au feu de 38,7 %.

Les cristallites de boehmite ont un diamètre moyen de 9,8 nm (98 Å).

Ces billes sont ensuite séchées et calcinées à 900°C pendant 2 heures.

Le produit obtenu a les caractéristiques suivantes :

- surface spécifique : 126 $m^2/g$

vieillissement à 982°C pendant 24 heures : 53 $m^2/g$

- densité de grain : 0,87
- EGG (écrasement grain à grain) : 3,8 daN

vieilli à 982°C pendant 24 heures : 2,6 daN

- résistance à l'attrition (AIF) : 98,4 %

vieilli à 982°C pendant 24 heures : 96 %

- volume poreux total : 0,867 $cm^3/g$.

pour pores de

∅ > 1000 nm (10000 Å) : 0,06 $cm^3/g$

∅ > 100 nm (1000 Å) : 0,28 $cm^3/g$

∅ > 10 nm (100 Å) : 0,75 $cm^3/g$

Cet exemple montre également que la répartition de pores obtenue après mûrissement ou maturation est sensiblement conservée pendant l'autoclavage et la calcination.

Un autre point remarquable du procédé réside dans l'élimination d'une très grande partie du sodium contenu dans l'alumine, ce sodium étant souvent indésirable dans les différentes utilisations de l'alumine, notamment quand elle est utilisée comme support de catalyseur.

## Revendications

1. Procédé de fabrication d'agglomérés d'alumine poreux, du type consistant à :

(i) former des corps d'alumine par agglomération d'une poudre d'alumine obtenue par déshydratation rapide d'un hydroxyde d'aluminium,

(ii) réaliser une maturation de ces corps d'alumine en atmosphère humide,

(iii) activer par calcination ces corps d'alumine,

(iv) imprégner les corps d'alumine ainsi obtenus par une solution d'un ou plusieurs acides,

(vi) soumettre ces corps imprégnés à un traitement hydrothermal en autoclave,

(vii) sècher et calciner ces corps,

et caractérisé en ce que, dans le but de contrôler la porosité des agglomérés d'alumine et en particulier d'aboutir à des agglomérés d'alumine ayant une répartition de pores de type bimodale, on ômet l'étape (iii) ci-dessus.

2. Procédé selon la revendication 1, caractérisé en ce qu'après l'étape (ii) de maturation, les corps d'alumine sont sèchés à une température inférieure à 200°C.

3. Procédé selon la revendication 1 ou 2, caractérisé en ce qu'un composé porogène est ajouté à la poudre d'alumine avant ou pendant l'étape (i) d'agglomération.

4. Procédé selon la revendication 3, caractérisé en ce que la quantité pondérale de porogène ajoutée est comprise entre 0 et 25 % par rapport à la poudre d'alumine.

5. Procédé selon l'une des revendication précédentes, caractérisé en ce que la solution acide de l'étape (iv) d'imprégnation est une solution d'acide nitrique, chlorhydrique, perchlorique, sulfurique, d'acide faible dont la solution a un pH inférieur à 4, tel que l'acide acétique ou un mélange de ces acides.

6. Procédé selon la revendication 5, caractérisé en ce que la solution acide comprend un composé libérant un anion capable de se combiner avec les ions aluminium choisi dans le groupe des anions nitrate, chlorure, sulfate, perchlorate, chloroacétate, dichloroacétate, bromoacétate, dibromoacétate, et les anions de formule générale :

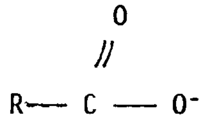

7. Procédé selon l'une des revendications précédentes, caractérisé en ce que l'étape (ii) de maturation des corps d'alumine est conduite à une température comprise entre 30°C et 100°C.

8. Procédé selon l'une des revendications précédentes, caractérisé en ce que le traitement hydrothermal est réalisé à une température supérieur à 80°C, de préférence comprise entre 150°C et 250°C.

9. Procédé selon l'une des revendications précédentes, caractérisé en ce que les corps d'alumine, avant calcination ou activation ont un taux en boehmite inférieur à 60%, les cristallites de boehmite ayant un diamètre moyen inférieur à 12 nm (120 Å).

10. Procédé selon l'une des revendications précédentes, caractérisé en ce que les corps d'alumine obtenus après calcination présentent une répartition de pores bimodale comprenant des pores de diamètre supérieur à 1000 A et des pores de diamètre compris entre 5 et 100 nm (50 Å et 1000 Å).

11. Procédé selon l'une des revendications précédentes, caractérisé en ce que les corps d'alumine sont calcinés à une température comprise entre 400°C et 1000°C.

## Patentansprüche

1. Verfahren zur Herstellung von Agglomeraten aus porösem Aluminiumoxid, bestehend in der:

(i) Bildung von Aluminiumoxidkörpern durch Agglomeration eines Aluminiumoxidpulvers, das durch schnelle Dehydratation eines Aluminiumhydroxids erhalten wird,

(ii) Reifung der Aluminiumoxidkörper in feuchter Atmosphäre,

(iii) Aktivierung der Aluminiumoxidkörper durch Kalzinieren,

(iv) Imprägnierung der erhaltenen Aluminiumoxidkörper so, mit der Lösung einer oder mehrerer Saüren,

(vi) Hydrothermalen Behandlung der imprägnierten Körper im Autoklaven,

(vii)Trocknen und Kalzinieren der Körper,

und dadurch gekennzeichnet, daß man zum Zwecke der Porositäts-Kontrolle der Aluminiumoxidagglomerate und insbesondere um Aluminiumoxidagglomerate mit einer bimodalen Porenverteilung zu erhalten, die obige Stufe (iii) ausläßt.

2. Verfahren nach Anspruch 1, dadurch gekennzeichnet, daß nach der Reifestufe (ii) die Aluminiumoxidagglomerate bei einer Temperatur unter 200°C getrocknet werden.

3. Verfahren nach Anspruch 1 oder 2, dadurch gekennzeichnet, daß dem Alumimiumoxidpulver vor oder während der Agglomerierungsstufe (i) ein porenbildender Stoff zugefügt wird.

4. Verfahren nach Anspruch 3, dadurch gekennzeichnet, daß die Gewichtsmenge des zugefügten porenbildenden Stoffes zwischen 0 und 25 % bezogen auf das Aluminiumoxidpulver liegt.

5. Verfahren nach einem der vorhergehenden Ansprüche, dadurch gekennzeichnet, daß die saure Lösung der Imprägnierungsstufe (iv) eine Lösung

einer Salpeter-, Salz-, Perchlor-, Schwefelsäure und schwachen Säure, bei der die Lösung einen pH-Wert unter 4 hat, wie Essigsäure, oder ein Gemisch dieser Säuren ist.

6. Verfahren nach Anspruch 5, dadurch gekennzeichnet, daß die saure Lösung eine Verbindung enthält, die ein Anion freisetzt, das sich mit Aluminiumionen, verbinden kann und das aus der Gruppe der Nitrat-, Chlorid-, Sulfat-, Perchlorat-, Chloracetat-, Dichloracetat-, Bromacetat-, Dibromacetatanionen und Anionen der allgemeinen Formel:

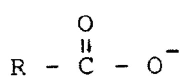

ausgewählt ist.

7. Verfahren nach einem der vorhergehenden Ansprüche, dadurch gekennzeichnet, daß die Reifungsstufe (ii) der Aluminiumoxidkörper bei einer Temperatur zwischen 30°C und 100°C durchgeführt wird.

8. Verfahren nach einem der vorhergehenden Ansprüche, dadurch gekennzeichnet, daß die hydrothermale Behandlung bei einer Temperatur über 80°C, vorzugsweise zwischen 150°C und 250°C durchgeführt wird.

9. Verfahren nach einem der vorhergehenden Ansprüche, dadurch gekennzeichnet, daß die Aluminiumoxidkörper vor der Kalzinierung oder Aktivierung einen Boehmitgehalt unter 60% haben, wobei die Boehmitkristalle einen mittleren Durchmesser unter 12 nm (120 Å) haben.

10. Verfahren nach einem der vorhergehenden Ansprüche, dadurch gekennzeichnet, daß die nach der Kalzinierung erhaltenen Aluminiumoxidkörper eine bimodale Porenverteilung mir einem Porendurchmesser über 100 nm (1000 Å) und einem Porendurchmesser zwischen 5 und 100 nm ( 50 Å und 1000 Å ) aufweisen.

11. Verfahren nach einem der vorhergehenden Ansprüche, dadurch gekennzeichnet, daß die Aluminiumoxidkörper bei einer Temperatur zwischen 400°C und 1000°C kalziniert werden.

## Claims

1. A process for the production of porous agglomerates of alumina, of the type comprising:

(i) forming bodies of alumina by agglomeration of an alumina powder obtained by rapid dehydration of an aluminium hydroxide,

(ii) effecting ageing of said alumina bodies in a moist atmosphere,

(iii) activating said alumina by roasting,

iv) impregnating the alumina bodies obtained in that way with a solution of one or more acids,

(iv) subjecting said impregnated bodies to a hydrothermal treatment in a autoclave, and (vii) drying and roasting said bodies,

and characterised in that in order to control the porosity of the alumina agglomerates and in particular to produce alumina agglomerates having a distribution of pores of bimodal type, step (iii) above is omitted.

2. A process according to claim 1, characterised in that after ageing step (ii), the alumina bodies are dried at a temperature of lower than 200°C.

3. A process according to claim 1 or claim 2 characterised in that a porogenic compound is added to the alumina powder before or during the agglomeration step (i).

4. A process according to claim 3 characterised in that the amount of porogenic agent added by weight is between 0 and 25% with respect to the alumina powder.

5. A process according to one of the preceding claims characterised in that the acid solution of impregnation step (iv) is a solution of nitric, hydrochloric, perchloric, or sulphuric acid, a weak acid whose solution has a pH-value of less than 4, such as acetic acid, or a mixture of said acids.

6. A process according to claim 5 characterised in that the acid solution comprises a compound which liberates an anion capable of combining with the aluminium ions, which is selected from the group of nitrate, chloride, sulphate, perchlorate, chloroacetate, dichloroacetate, bromoacetate and dibromoacetate anions and anions of the following general formula:

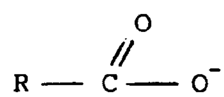

7. A process according to one of the preceding claims characterised in that step (ii) for ageing of the alumina bodies is carried out at a temperature of between 30°C and 100°C.

8. A process according to one of the preceding claims characterised in that the hydrothermal treatment is effected at a temperature of higher than 80°C, preferably between 150°C and 250°C.

9. A process according to one of the preceding claims characterised in that the alumina bodies, prior to roasting or activation, have an amount of boehmite of less than 60%, the mean diameter of the boehmite crystallites being less than 12 nm (120 Å).

10. A process according to one of the preceding claims characterised in that the alumina bodies obtained after roasting have a bimodal pore distribution comprising pores of a diameter of larger than 100 Å and pores of a diameter of between 5 and 100 nm (50 Å and 1000 Å).

11. A process according to one of the preceding

claims characterised in that the alumina bodies are roasted at a temperature of between 400°C and 1000°C.

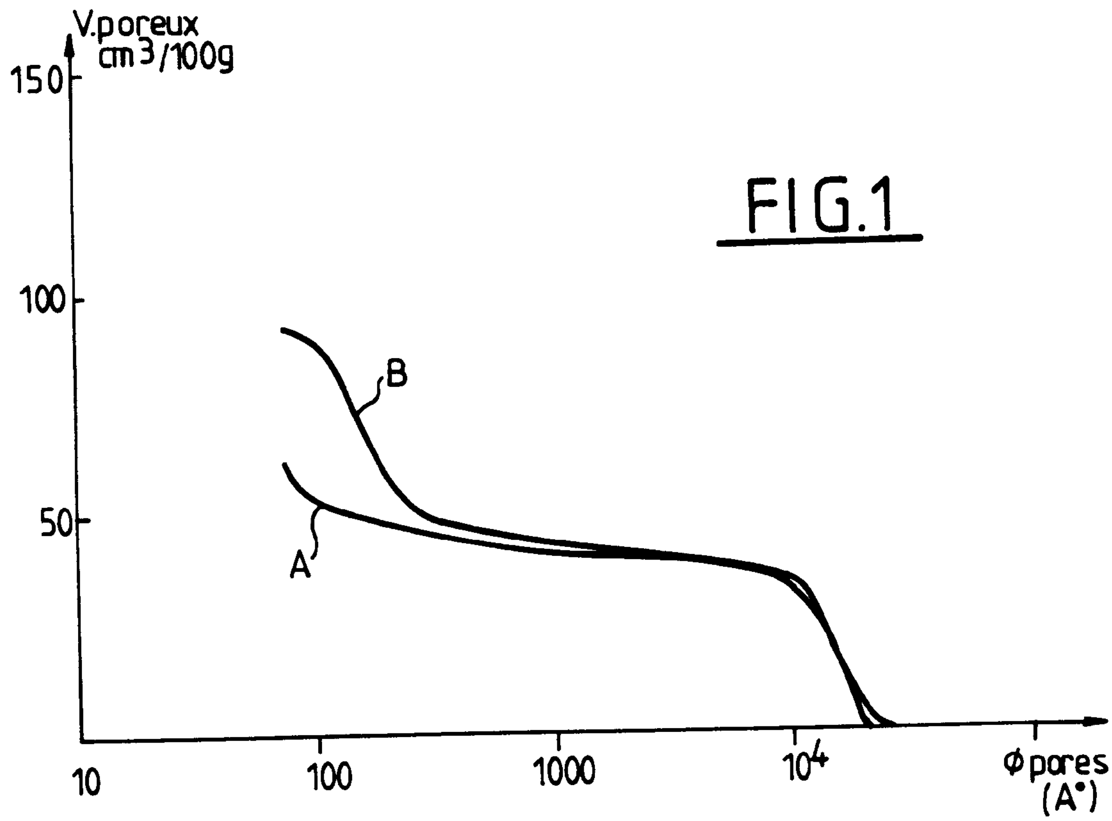
V.poreux
cm3/100g
150
100
50
B
A
10
100
1000
10⁴
Φ pores
(A°)

FIG.1

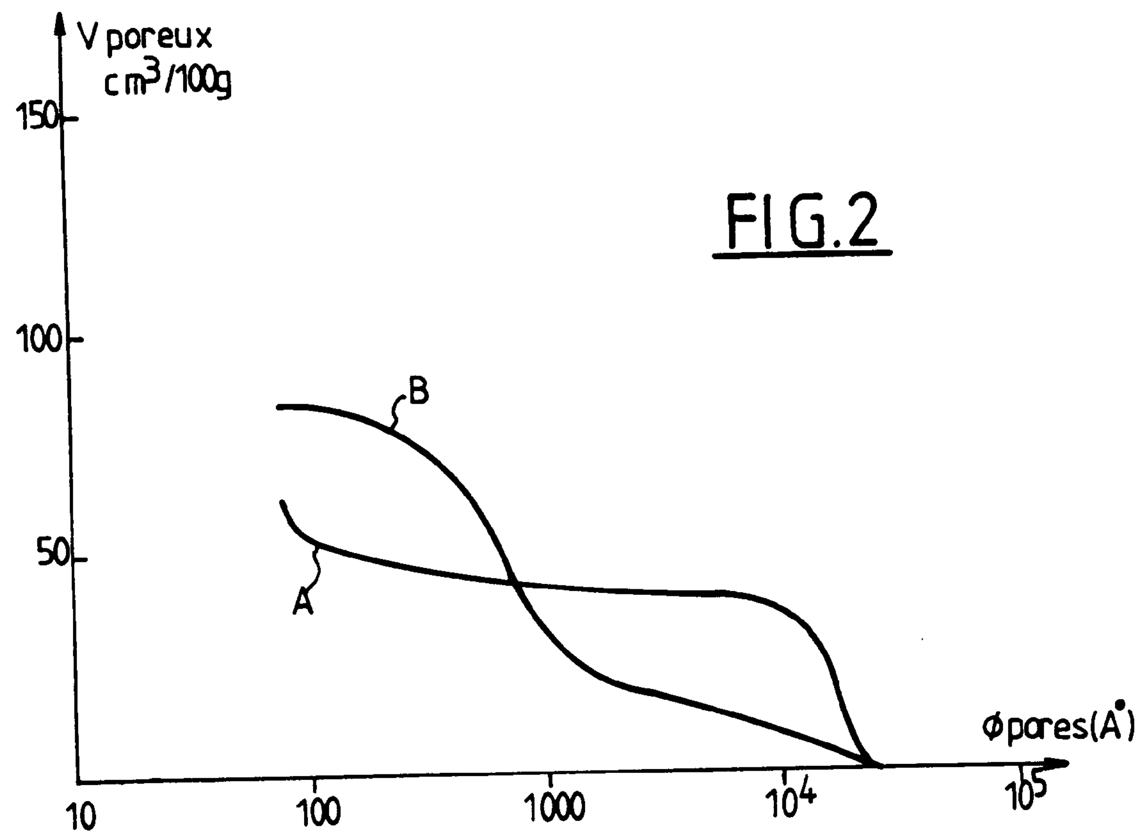
V poreux
cm3/100g
150
100
50
B
A
Φ pores(A°)
10
100
1000
10⁴
10⁵

FIG.2